(19) Europäisches Patentamt
European Patent Office
Office européen des brevets

(11) EP 0 513 569 B1

(12) EUROPÄISCHE PATENTSCHRIFT

(45) Veröffentlichungstag und Bekanntmachung des Hinweises auf die Patenterteilung:
**14.10.1998 Patentblatt 1998/42**

(51) Int Cl.[6]: **H01B 3/44**, C08K 5/09

(21) Anmeldenummer: **92106900.1**

(22) Anmeldetag: **23.04.1992**

# (54) Elektrisches Mittel- und Hochspannungskabel mit einer Kabelummantelung von hoher Widerstandsfestigkeit gegenüber der Bildung und dem Wachstum von Wasserbäumchen

Electrical cables containing insulations which are highly resistant to formation and growth of water-trees

Câbles électrique pour moyenne et haute tension ayant une résistance élevée à la formation et la croissance d'arborescences

(84) Benannte Vertragsstaaten:
**AT CH DE DK FR GB LI NL SE**

(30) Priorität: **15.05.1991 DE 4115751**
**15.05.1991 DE 4135202**
**15.05.1991 DE 4135201**
**14.12.1991 DE 4141273**
**14.12.1991 DE 4141272**

(43) Veröffentlichungstag der Anmeldung:
**19.11.1992 Patentblatt 1992/47**

(73) Patentinhaber: **BASF Aktiengesellschaft**
**67063 Ludwigshafen (DE)**

(72) Erfinder:
- **Vogt, Heinz, Dr.**
  **W-6700 Ludwigshafen (DE)**
- **Hennig, Ingolf, Dr.**
  **W-6140 Bensheim (DE)**
- **Schlag, Johannes, Dr.**
  **W-6700 Ludwigshafen (DE)**
- **Muehlenbernd, Thomas, Dr.**
  **Dear State, Minami Magome, 143 Tokyo-to (JP)**

(56) Entgegenhaltungen:
**EP-A- 0 297 414** **EP-A- 0 358 082**
**DE-A- 2 911 756**

- **WORLD PATENTS INDEX LATEST Derwent Publications Ltd., London, GB; AN 81-82290D**
- **WORLD PATENTS INDEX LATEST Derwent Publications Ltd., London, GB; AN 84-032495**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein neues elektrisches Mittel- und Hochspannungskabel von hoher Widerstandsfähigkeit gegenüber der Bildung und dem Wachstum von Wasserbäumchen. Außerdem betrifft die vorliegende Erfindung die Verwendung von speziell ausgewählten $C_2$- bis $C_8$-Carbonsäuren und/oder von Anhydriden dieser Carbonsäuren als Inhibitoren der Bildung oder des Wachstums von Wasserbäumchen in Ethylenhomopolymerisaten und -copolymerisaten unter dem Einfluß starker elektrischer Felder. Des weiteren betrifft die Erfindung neue elektrisch isolierende und elektrisch halbleitende Gemische auf der Basis von Ethylenhomopolymerisaten und/oder -copolymerisaten, welche sich insbesondere für die Herstellung der elektrisch isolierenden Schichten oder der elektrisch halbleitenden Schichten zur Begrenzung des elektromagnetischen Feldes in elektrischen Mittel- und Hochspannungskabeln eignen.

Elektrische Mittel- und Hochspannungskabel sind wohlbekannt. Sie enthalten üblicherweise mindestens eine elektrisch halbleitende Schicht zur Begrenzung des elektromagnetischen Feldes und mindestens eine elektrisch isolierende Schicht. Sowohl die elektrisch isolierenden als auch die elektrisch halbleitenden Schichten können aus polymeren Gemischen auf der Basis von Ethylenhomopolymerisaten und/oder -copolymerisaten bestehen. Hierbei enthalten die elektrisch halbleitenden Schichten üblicherweise hohe Mengen eines elektrisch leitfähigen Pigments.

Es ist essentiell, daß sowohl die elektrisch isolierenden als auch die elektrisch halbleitenden Gemische, aus denen die betreffenden elektrisch isolierenden und elektrisch halbleitenden Schichten bestehen, ganz bestimmte physikalische, mechanische und elektrische Eigenschaften aufweisen, damit sie für die hier in Rede stehenden speziellen Anwendungszwecke in der Kabelindustrie geeignet sind. Insbesondere muß ihre Widerstandsfähigkeit gegenüber der Bildung von Wasserbäumchen (water trees) derart verbessert sein, daß die betreffenden Kabelummantelungen mit ihrem zwar geringen aber technisch nicht vermeidbaren Gehalt an Wasserbäumchen initiierenden wasserlöslichen Salzen bei lang andauernder Spannungsbelastung in der Gegenwart von Wasser oder Luftfeuchtigkeit keine Schädigungen erleiden, welche die Lebensdauer der elektrischen Mittel- und Hochspannungskabel herabsetzen.

Es gibt zahlreiche Vorschläge zur Vermeidung bzw. Verminderung der Bildung oder des Wachstums von Wasserbäumchen, welche die Zusammensetzung der Schichten oder die Zugabe von Inhibitoren gegen die Bildung und das Wachstum von Wasserbäumchen betreffen.

So ist es aus der DE-A-29 48 492 bekannt, das für die Herstellung elektrischer Mittel- und Hochspannungskabel vorgesehene Polyolefinmaterial nach der Granulierung und unmittelbar vor der Extrusion mit reinem Wasser zu waschen, um die die Wasserbäumchen verursachenden geringen Mengen wasserlöslicher und hygroskopischer Salze zu entfernen (vgl. auch die DE-A-29 11 756). Nachteilig bei diesem bekannten Verfahren ist der verhältnismäßig große Verfahrensaufwand, denn die Granulate müssen nach dem Waschvorgang mit Heißluft getrocknet werden.

Es ist auch bereits beschrieben, dem für die Herstellung elektrischer Mittel- und Hochspannungskabel vorgesehenen Polyolefinmaterial sogenannte Wasserbäumchen-Inhibitoren zuzusetzen, welche sich von polymeren Materialien ableiten. So werden zu diesem Zweck in der Literatur empfohlen: Organopolysiloxane (vgl. die US-A-4 492 647, die US-A-4 536 530 und die EP-A-0 109 797), Polyethylenglykole (vgl. die EP-A-0 057 604), Epoxidharze (vgl. Chem. Abstr. 96: 182235), Ethylen-But-1-en- oder -Hex-l-en-Copolymerisate (vgl. Chem. Abstr. 101: 193825), Polypropylen (vgl. Chem. Abstr. 102: 8329), Polybut-1-en (vgl. Chem. Abstr. 98: 5097), Ethylen-Vinylacetat-Copolymerisate (vgl. Chem. Abstr. 93: 169329), Polystyrol und Triallylisocyanurat (vgl. die DD-A-160 808), mit Styrol gepfropftes Ethylen-Vinylacetat- oder Ethylen-Alkylacrylat-Copolymerisat (vgl. Chem. Abstr. 103: 7802), Polyvinylalkohol (vgl. Chem. Abstr. 95: 204983), chlorsulfoniertes Polyethylen (vgl. Chem. Abstr. 95: 204981), Polyamid (vgl. Chem. Abstr. 96: 21007), Ethylen-Ethylacrylat-Copolymerisat (vgl. Chem. Abstr. 99: 177160) oder ein Styrolcopolymerisat, z.B. Styrol-Butadien- oder Styrol-Isopren-Kautschuk (vgl. Chem. Abstr 92: 7572).

Bei den oben beschriebenen bekannten elektrischen Mittel- und Hochspannungskabeln auf der Basis von Polyolefinen mit Zusätzen von polymeren Wasserbäumchen-Inhibitoren sind die Effekte und die Beeinflussung des Wasserbäumchenwachstums sehr unterschiedlich; quantitative Aussagen fehlen in den meisten Fällen. Häufig wirken sich die Zusätze negativ auf andere anwendungstechnische Eigenschaften der Polyolefingemische und der hiermit hergestellten elektrischen Mittel- und Hochspannungskabel aus.

In EP-A-0 297 414 werden elektrisch isolierende Polyolefinmischungen, die aliphatische Fettsäuren zur Vermeidung der Bildung oder des Wachstums von Wasserbäumchen enthalten, beschrieben.

Den Nachteilen der bislang bekannten Inhibitoren hat man durch die Verwendung von Gemischen aus Ethylenhomopolymerisaten und/oder -copolymerisaten zu begegnen versucht (vgl. die US-A-4 092 488, die EP-A-0 248 148, die EP-A-0 323 581, die EP-A-0 341 621 und die EP-A-0 358 082). Was allerdings die Beständigkeit gegenüber der Bildung und des Wachstums von Wasserbäumchen betrifft, versagten die betreffenden elektrischen Mittel- und Hochspannungskabel vor allem in den Fällen, in denen eine elektrisch isolierende Schicht mit einer Rußpigmente enthaltenden elektrisch halbleitenden Schicht kombiniert wird. Hier haben umfangreiche Untersuchungen ergeben, daß die Ursache für die ausgesprochen starke Bildung und das ausgesprochen schnelle Wachstum von Wasserbäumchen in dem geringen aber technisch nicht vermeidbaren Gehalt an wasserlöslichen basischen Salzen in der elektrisch halbleitenden Schicht liegt.

Aufgabe der vorliegenden Erfindung ist es, neue, in ihren anwendungstechnischen Eigenschaften verbesserte elektrische Mittel- und Hochspannungskabel auf der Basis von Ethylenhomopolymerisaten und/oder -copolymerisaten zu finden, welche auch in Anwesenheit wasserlöslicher basischer Salze von hoher Widerstandsfähigkeit gegenüber der Bildung und dem Wachstum von Wasserbäumchen sind.

Diese Aufgabe konnte durch die Verwendung speziell ausgewählter $C_2$- bis $C_8$-Carbonsäuren und/oder von Anhydriden mindestens einer dieser Carbonsäuren als Inhibitoren der Bildung oder des Wachstum von Wasserbäumchen in Ethylenhomopolymerisaten und/oder -copolymerisaten unter dem Einfluß starker elektrischer Felder gelöst werden. Im Hinblick auf den Stand der Technik stand es nicht zu erwarten, daß ausgerechnet die speziell ausgewählten Carbonsäuren und/oder deren Anhydride sowohl die durch basische Salze ausgelöste Bildung von Wasserbäumchen als auch deren weiteres Wachstum wirksam inhibieren.

Demgemäß handelt es sich bei dem Gegenstand der vorliegenden Erfindung um die Verwendung von $C_2$- bis $C_8$-Carbonsäuren der allgemeinen Formel I,

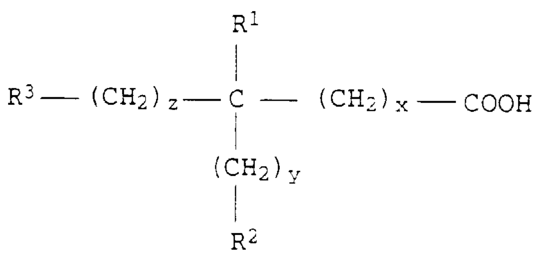

(I)

worin die Indices und die Variablen die folgende Bedeutung haben:

$R^1$, $R^2$ und $R^3$:
unabhängig voneinander Wasserstoffatom und Hydroxy-, Carboxyl- und $C_1$- bis $C_6$-Alkylgruppe,
x, y und z:
unabhängig voneinander 0 oder ganze Zahlen von 1 bis 6; und/oder von den Anhydriden mindestens einer dieser Carbonsäuren I als Inhibitoren der Bildung oder des Wachstums von Wasserbäumchen (water trees) in Ethylenhomopolymerisaten und/oder -copolymerisaten unter dem Einfluß starker elektrischer Felder.

Im folgenden werden die erfindungsgemäß anzuwendenden Carbonsäuren der allgemeinen Formel I der Kürze halber als "Carbonsäuren I" und die von ihnen abgeleiteten Anhydride als "Anhydride I" bezeichnet.

Ein weiterer Gegenstand der vorliegenden Erfindung sind elektrisch isolierende und elektrisch halbleitende Gemische auf der Basis von Ethylenhomopolymerisaten und/oder -copolymerisaten, welche mindestens eine Carbonsäure I und/oder mindestens ein Anhydrid I enthalten.

Außerdem sind elektrische Mittel- und Hochspannungskabel mit elektrisch halbleitenden und/oder isolierende Schichten aus den vorstehend genannten Gemischen weitere Gegenstände der vorliegenden Erfindung.

Erfindungsgemäß werden Carbonsäuren I und/oder Anhydride I als Inhibitoren der Bildung oder des Wachstums von Wasserbäumchen (water trees) verwendet.

In der allgemeinen Formel I stehen die Indices x, y und z für 0 oder eine ganze Zahl von 1 bis 6, vorzugsweise 0 oder 1 bis 3.

Beispiele geeigneter $C_1$- bis $C_6$-Alkylgruppen R1, R2 und R3 in der allgemeinen Formel I sind Methyl, Ethyl, Propyl, Isopropyl, n-Butyl, sec.-Butyl, tert.-Butyl, n-Pentyl, Amyl, Neopentyl und n-Hexyl.

Beispiele gut geeigneter Carbonsäuren I sind demnach Essigsäure, Propionsäure, Buttersäure, Isobuttersäure, Valeriansäure, Isovaleriansäure, Pivalinsäure, Malonsäure, Bernsteinsäure, Glutarsäure, Adipinsäure, Pimelinsäure, Korksäure, Äpfelsäure, Weinsäure, Traubensäure, Tartronsäure, Mesoxalsäure und Zitronensäure. Von diesen wird die Zitronensäure ganz besonders bevorzugt verwendet.

Beispiele gut geeigneter Anhydride I sind demnach die Anhydride der vorstehend genannten Carbonsäuren I sowie die gemischten Anhydride mindestens zweier der vorstehend genannten Carbonsäuren I.

Von all diesen Anhydriden I wird das Anhydrid der Zitronensäure ganz besonders bevorzugt verwendet.

In der erfindungsgemäß bevorzugten Ausführungsform werden die Carbonsäuren I und/oder die Anhydride I in den Ethylenhomopolymerisaten und/oder -copolymerisaten in einer Menge von 0,01 bis 5 Gew.-%, bezogen auf das gesamte Gemisch, angewandt. Werden weniger als 0,01 Gew.-% verwendet, vermag der inhibierende Effekt nicht mehr in vollem Umfang zu befriedigen. Dagegen lohnt die Steigerung der Inhibitorwirkung nicht den erhöhten Materialaufwand und Preis, wenn der Gehalt an Carbonsäuren I und/oder Anhydriden I auf über 5 Gew.-% erhöht wird.

Außerdem können diese hohen Zuschlagsmengen die mechanischen Eigenschaften der betreffenden Gemische auf der Basis von Ethylenhomopolymerisaten und/oder - copolymerisaten nachteilig beeinflussen. Demnach handelt es sich bei dem Bereich von 0,01 bis 5 Gew.-% um einen optimalen Bereich, innerhalb dessen der Gehalt an Carbonsäuren I und/oder Anhydriden I in den Gemischen breit variiert und den jeweiligen technischen Problemen hervorragend angepaßt werden kann. Innerhalb dieses optimalen Bereichs ist derjenige von 0,05 bis 2 Gew.-% hervorzuheben, weil Gemische auf der Basis von Ethylenhomopolymerisaten und/oder -copolymerisaten, welche einen solchen Gehalt aufweisen, besonders gut für die Herstellung elektrischer Mittel- und Hochspannungskabel geeignet sind.

Erfindungsgemäß entfalten die Carbonsäuren I und/oder die Anhydride I ihre inhibierende Wirkung in Gemischen auf der Basis von Ethylenhomopolymerisaten und/oder -copolymerisaten. Diese Wirkung ist in Gemischen auf der Basis von Ethylenhomopolymerisaten und/oder -copolymerisaten, welche sich für die Herstellung von elektrisch isolierenden und/oder elektrisch halbleitenden Schichten zur Begrenzung des elektromagnetischen Feldes in elektrischen Mittel- und Hochspannungskabeln eignen, ganz besonders ausgeprägt.

Beispiele für Ethylenhomopolymerisate und -copolymerisate, welche für diesen Anwendungszweck ganz besonders gut geeignet sind, sind

- Ethylenhomopolymerisate niedriger Dichte, insbesondere einer Dichte nach DIN 53 479 von < 0,934 g/cm$^3$
- Ethylencopolymerisate mit a-Monoolefinen, welche 3 bis 8 Kohlenstoffatome enthalten und deren Anteil im Copolymerisat bei 5 bis 15 Gew.-% liegt
- Ethylen-Vinylacetat-Copolymerisate, welche vorzugsweise 0,5 bis 20 Gew.-% einpolymerisiertes Vinylacetat enthalten
- Ethylen-Acrylester-Copolymerisate, welche vorzugsweise 0,5 bis 20 Gew.-% an einpolymerisiertem Acrylester aufweisen
- Ionomere auf der Basis von Ethylen-Acrylsäure-Copolymerisaten oder Ethylen-Acrylsäure-Acrylester-Terpolymeren und
- Ethylen-Acrylsäure-Acrylester-Terpolymere

sowie deren Mischungen.

Ethylenhomopolymerisate und -copolymerisate der genannten Art sind üblich und bekannt und werden beispielsweise in den Patentschriften US-A-4 092 488, EP-A-0 248 148, EP-A-0 323 581, EP-A-0 341 621 oder EP-A-0 358 082 beschrieben.

Außer den erfindungsgemäß zu verwendenden Carbonsäuren I und/oder Anhydriden I können die neuen Gemische auf der Basis von Ethylenhomopolymerisaten und/oder -copolymerisaten weitere übliche und bekannte Zusatzstoffe wie Antioxidantien, Flammschutzmittel, Vernetzungshilfsmittel wie Triallylcyanurat und Vernetzungsmittel wie organische Peroxide enthalten.

Die vorstehend genannten neuen Gemische weisen hervorragende elektrisch isolierende Eigenschaften auf und sind von hoher Widerstandsfähigkeit gegenüber der Bildung oder dem Wachstum von Wasserbäumchen unter dem Einfluß starker elektrischer Felder. Sie eignen sich deshalb hervorragend für die Herstellung der elektrisch isolierenden Schichten elektrischer Mittel- und Hochspannungskabel. Die hohe Widerstandsfähigkeit gegenüber der Bildung oder dem Wachstum von Wasserbäumchen ist auch in der Gegenwart wasserlöslicher basischer Salze wie Natrium- oder Kaliumcarbonat oder Natriumnitrit gewährleistet.

Des weiteren können diesen elektrisch isolierenden Gemischen auf der Basis von Ethylenhomopolymerisaten und/oder -copolymerisaten und Carbonsäuren I und/oder Anhydriden I noch elektrische leitfähige Pigmente wie z. B. N-Vinylcarbazol-, Poly-N-vinylcarbazol- oder Rußpigmente in hohen Mengen zugesetzt werden, wodurch elektrisch halbleitende Gemische resultieren, welche sich aufgrund ihrer Widerstandsfähigkeit gegenüber der Bildung oder dem Wachstum von Wasserbäumchen unter dem Einfluß starker elektrischer Felder hervorragend für die Herstellung der elektrisch halbleitenden Schichten elektrischer Mittel- und Hochspannungskabel eignen. Elektrisch halbleitende Schichten dienen in solchen Kabeln bekanntermaßen der Begrenzung des elektromagnetischen Feldes. Die Beständigkeit dieser neuen elektrisch halbleitenden Gemische gegenüber der Bildung oder dem Wachstum von Wasserbäumchen ist so groß, daß es in den betreffenden Kabelummantelungen noch nicht einmal zum gefürchteten Anwachsen von Wasserbäumchen an den Grenzflächen zwischen halbleitenden Schichten und isolierenden Schichten kommt.

Diese ungewöhnlich hohe und vorteilhafte Widerstandsfähigkeit kann sehr schön anhand eines neuen Testverfahrens zur Bestimmung der Neigung polymerer Gemische, unter dem Einfluß starker elektrischer Felder Wasserbäumchen auszubilden, nachgewiesen werden. Bei diesem neuen Testverfahren bringt man Wasserbäumchen auslösende Reagenzien in der Form einer Schicht aus feinverteilten kleinen Kristallen auf der Oberfläche einer ersten Folie oder Platte aus dem zu prüfenden polymeren Gemisch auf. Erfindungsgemäß verwendet man hierbei als Reagenzien wasserlösliche basische Salze wie beispielsweise Natrium- oder Kaliumcarbonat oder Natriumnitrit. Vorzugsweise liegt die Größe der Kristalle bei ca. 10 µm. Hiernach legt man eine zweite Folie oder Platte aus demselben oder einem anderen zu prüfenden polymeren Gemisch auf die Schicht aus feinverteilten kleinen Kristallen auf, wodurch ein Sandwich gebildet wird. Dieses Sandwich wird dann bei höheren Temperaturen, vorzugsweise bei Temperaturen um 200°C, auf eine bestimmte definierte Dicke, vorzugsweise 1 mm, gepreßt. Die hierfür benötigte Zeit liegt im allgemeinen bei 1 bis 120 Minuten und kann vom Fachmann anhand einfacher Vorversuche ermittelt werden. Der Probekörper wird dann bei 100 %iger Luftfeuchtigkeit mit einem elektrischen Hochspannungsfeld belastet. Vorteilhafterweise werden hierbei Feldstärken oberhalb 1 kV/mm angewandt. Nach der elektrischen Belastung werden unter einem Lichtmikroskop die Anzahl, die Länge und die Struktur der entstandenen Wasserbäumchen im Probekörper ermittelt. Die Feststellung der Zahl der Wasserbäumchen erfolgt bei pigment freien Probekörpern im Strahlengang parallel zur Richtung des elektrischen Hochspannungsfeldes, in welchem die Belastung erfolgte. Bei Prüfkörpern mit einer halbleitenden Schicht wird die Anzahl der Wasserbäumchen an Dünnschnitten bestimmt. Hierbei wird die Zahl der gebildeten Wasserbäumchen auf die Zahl der Kristalle bezogen und als Menge in Gew.-% ausgedrückt. Im allgemeinen wird die Länge der Wasserbäumchen an Schnitten durch den Probekörper ermittelt, wobei die Blickrichtung senkrecht zu der des elektrischen Hochspannungsfeldes steht, in welchem die Belastung erfolgte.

Dieser neue Test ist erheblich schärfer als der bislang bekannte Cigré Task Force 15-06-05-Test, welcher mit Kochsalzkristallen durchgeführt wird (vgl. Cigré Symposium, Wien, 1987, Tagungsbericht S05-87, 620-10, M. Saure und W. Kolkner, "On Water Tree Testing of Materials, Status Report of Cigré TF 15-06-05"). Trotz dieser verschärften Testbedingungen zeigen die vorstehend beschriebenen neuen elektrisch isolierenden oder halbleitenden Gemische unter dem Einfluß starker elektrischer Felder keine oder nur eine vergleichsweise geringe Neigung zur Bildung von Wasserbäumchen. Dagegen zeigen die bekannten elektrisch isolierenden und halbleitenden Gemische in diesem Test deutlich schlechtere Ergebnisse.

Die Herstellung der neuen elektrisch isolierenden und halbleitenden Gemische sowie der betreffenden elektrischen Mittel- und Hochspannungskabel mit mindestens einer elektrisch halbleitenden Schicht zur Begrenzung des elektromagnetischen Feldes und mindestens einer elektrisch isolierenden Schicht aus den Ethylenhomopolymerisaten und/ oder -copolymerisaten und den erfindungsgemäß zu verwendenden Carbonsäuren I und/ oder Anhydriden I sowie gegebenenfalls aus den üblichen und bekannten Zusatzstoffen weist methodisch keine Besonderheiten auf, sondern erfolgt nach den üblichen und bekannten Verfahren zur Herstellung und Verarbeitung polymerer Gemische wie z.B. Extrusion, gefolgt von thermischer Vernetzung und/oder Vernetzung durch energiereiche Strahlung.

Die mit Hilfe der neuen elektrisch isolierenden und elektrisch halbleitenden Gemische hergestellten elektrischen Mittel- und Hochspannungskabel weisen auch unter ausgesprochen ungünstigen klimatischen Bedingungen eine vorteilhaft hohe Lebensdauer auf.

Beispiele 1 bis 6 und Vergleichsversuche V1 bis V3

Die Herstellung neuer (Beispiele 1 bis 6) und herkömmlicher (Vergleichsversuche V1 bis V3) Gemische und ihre Neigung, unter dem Einfluß starker elektrischer Felder Wasserbäumchen auszubilden.

Versuchsvorschrift:

Für das Beispiel 1 wurde gemäß dem Beispiel 4 der EP-A-0 358 082 ein Ethylenhomopolymerisat des Schmelzindex von 2 g/10 min und der Dichte von 0,918 g/cm$^3$ mit einem Ionomeren, bestehend aus 92 Gew.-% einpolymerisiertem Ethylen und 8 Gew.-% einpolymerisierter Acrylsäure, deren Carboxylgruppen zu 15 mol-% mit Triethanolamin neutralisiert waren, derart vermischt, daß das resultierende Gemisch 0,4 Gew.-% einpolymerisierter Acrylsäure enthielt. Dieses Gemisch aus Ethylenhomopolymerisat und -copolymerisat wurde mit, jeweils bezogen auf die Gesamtmischung, 0,3 Gew.-% 4,4'-Thio-bis-(6-tert.-butyl-3-methyl-phenol) als Wärmestabilisator, 1,8 Gew.-% Dicumylperoxid als Vernetzer und 0,5 Gew.-% Zitronensäure ausgerüstet.

Bei Beispiel 2 wurde wie vorstehend beschrieben verfahren, nur daß anstelle von Zitronensäure deren Anhydrid verwendet wurde.

Für das Beispiel 3 wurden gemäß dem Beispiel 1 der EP-A-0 341 621 90 Gew.-% eines Ethylenpolymerisats des Schmelzindex von 2 g/10 min und der Dichte von 0,918 g/cm$^3$ mit 10 Gew.-% eines Copolymerisats der Dichte von 0,903 g/cm$^3$ eines Schmelzindex von 1 g/10 min, einem Verhältnis $\overline{M}_w/\overline{M}_n$ von 6 und einem Kristallitschmelzpunkt von 121°C aus, bezogen auf das Copolymerisat, 88 Gew.-% an einpolymerisiertem Ethylen und 12 Gew.-% an einpolymerisiertem But-1-en vermischt. Diese Mischung wurde mit, bezogen auf das gesamte resultierende Gemisch, 0,3 Gew.-% 4,4'-Thiobis-(6-tert.-butyl-3-methyl-phenol) als Wärmestabilisator, 1,8 Gew.-% Dicumylperoxid als Vernetzer und 0,5 Gew.-% Zitronensäure ausgerüstet.

Bei Beispiel 4 wurde wie bei Beispiel 3 verfahren, nur daß anstelle von Zitronensäure deren Anhydrid verwendet wurde.

Für das Beispiel 5 wurden gemäß Beispiel 1 der EP-A-0 323 581 ein Ethylenhomopolymerisat des Schmelzindex von 2 g/10 min und der Dichte von 0,918 g/$cm^3$ mit einem Copolymerisat, bestehend aus, bezogen auf das Copolymerisat, 92 Gew.-% an einpolymerisiertem Ethylen und 8 Gew.-% einpolymerisierter Acrylsäure, deren Carboxylgruppen zu 30 mol-% mit $Zn^{2+}$ neutralisiert waren, derart gemischt, daß die resultierende Mischung 1,6 Gew.-% einpolymerisierter Acrylsäure enthielt. Diese Mischung wurde wie in Beispiel 1 oder 2 beschrieben mit einem Wärmestabilisator und einem Vernetzer sowie mit, bezogen auf das gesamte resultierende Gemisch, 0,5 Gew.-% Zitronensäure ausgerüstet.

Bei Beispiel 6 wurde wie bei Beispiel 5 verfahren, nur daß anstelle von Zitronensäure deren Anhydrid verwendet wurde.

Bei den Vergleichsversuchen V1 bis V3 wurde im wesentlichen wie bei den Beispielen 1 bis 6 verfahren, nur daß die herkömmlichen Gemische der Vergleichsversuche keine Zitronensäure enthielten.

Bei der Prüfung der Bildung und des Wachstums von Wasserbäumchen wurde bei dem herkömmlichen Test Kochsalz in Form kleiner Kristalle (Kantenlänge 10 µm) feinverteilt als Schicht in die erfindungsgemäßen Gemische der Beispiele 1 bis 3 und in die herkömmlichen Gemische der Vergleichsversuche VI bis V3 eingebracht. Dies geschah, indem das Salz auf eine unvernetzte Platte des betreffenden Gemischs aufgestäubt wurde. Hiernach wurde eine zweite Platte aus dem betreffenden erfindungsgemäßen oder herkömmlichen Gemisch aufgelegt, wonach man den resultierenden Sandwich bei 200°C während 10 Minuten auf eine Dicke von 1 mm preßte. Hierbei wurden die betreffenden Gemische thermisch vernetzt.

Die resultierenden Probekörper wurden dann bei 100 %iger Luftfeuchtigkeit mit einem elektrischen Feld der Feldstärke von 2,5 kV/mm belastet.

Nach der elektrischen Belastung wurden unter einem Lichtmikroskop die Anzahl, die Länge und die Struktur der entstandenen Wasserbäumchen in den einzelnen Proben festgestellt. Die Feststellung der Zahl der Wasserbäumchen geschah im Strahlengang parallel zur Richtung des zur Belastung angewandten elektrischen Feldes.

Die Zahl der gebildeten Wasserbäumchen wurde auf die Zahl der Natriumchlorid-Kristalle bezogen und als Menge in Gew.-% angegeben.

Dieser bekannte Test wurde in erfindungsgemäßer Verfahrensweise mit einem wasserlöslichen basischen Salz anstelle von Kochsalz wiederholt. Da sich Natriumnitrit als besonders aggressiver Auslöser von Wasserbäumchen erwiesen hatte, wurde dieses Salz anstelle von Kochsalz für den neuen Test verwendet.

Die bei den beiden Tests erhaltenen Ergebnisse werden in der Tabelle im Überblick dargestellt.

Die Ergebnisse belegen zum einen, daß die bekannten Gemische auf der Basis von Ethylenhomopolymerisaten und -copolymerisaten in der Gegenwart von Kochsalz zwar stabil gegenüber der Bildung und dem Wachstum von Wasserbäumchen sind, daß ihre Widerstandsfähigkeit in der Gegenwart des wasserlöslichen basischen Salzes Natriumnitrit dagegen zusammenbricht (vgl. die Vergleichsversuche V1 bis V3). Andererseits zeigen die Ergebnisse, daß noch nicht einmal Natriumnitrit nach 30 Tagen in den erfindungsgemäßen Gemischen der Beispiele 1 bis 6 Wasserbäumchen auslösen konnte.

Tabelle: Die Bildung von Wasserbäumchen in erfindungsgemäßen (Beispiele 1 bis 6) und herkömmlichen (Vergleichsversuche V1 bis V3) Gemischen, bestimmt in der Gegenwart von Kochsalz und in der Gegenwart von $NaNO_2$

| Beispiel Nr. | Verunreinigung | Wasserbäumchen nach 30 Tagen Belastung (Gew.-%) |
|---|---|---|
| 1 | NaCl<br>$NaNO_2$ | 0<br>0 |
| 2 | NaCl<br>$NaNO_2$ | 0<br>0 |
| 3 | NaCl<br>$NaNO_2$ | 0<br>0 |
| 4 | NaCl<br>$NaNO_2$ | 0<br>0 |
| 5 | NaCl<br>$NaNO_2$ | 0<br>0 |
| 6 | NaCl<br>$NaNO_2$ | 0<br>0 |
| Vergl.-Versuch | | |
| V1 | NaCl<br>$NaNO_2$ | 0<br>100 |
| V2 | NaCl<br>$NaNO_2$ | 0<br>100 |
| V3 | NaCl<br>$NaNO_2$ | 0<br>100 |

## Patentansprüche

**1.** Verwendung von $C_2$- bis $C_8$-Carbonsäuren der allgemeinen Formel I,

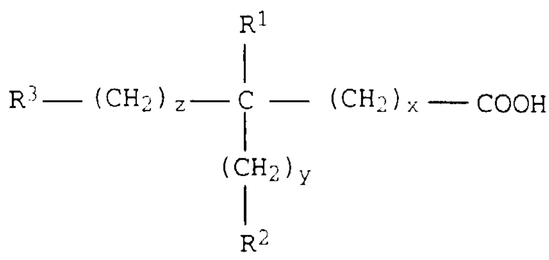
(I)

worin die Indices und die Variablen die folgende Bedeutung haben:

$R^1$, $R^2$ und $R^3$:
unabhängig voneinander Wasserstoffatom und Hydroxy-, Carboxy- und $C_1$- bis $C_6$-Alkylgruppe,
x, y und z:
unabhängig voneinander O oder ganze Zahlen von 1 bis 6;

und/oder von den Anhydriden mindestens einer dieser Carbonsäuren I als Inhibitoren der Bildung oder des Wachstums von Wasserbäumchen (water trees) in Ethylenhomopolymerisaten und/oder -copolymerisaten unter dem Einfluß starker elektrischer Felder.

**2.** Elektrisch isolierendes Gemisch auf der Basis von Ethylenhomo- und/oder -copolymerisaten, enthaltend, bezogen auf das Gemisch, 0,01 bis 5 Gew.-% mindestens einer $C_2$- bis $C_8$-carbonsäure der allgemeinen Formel I,

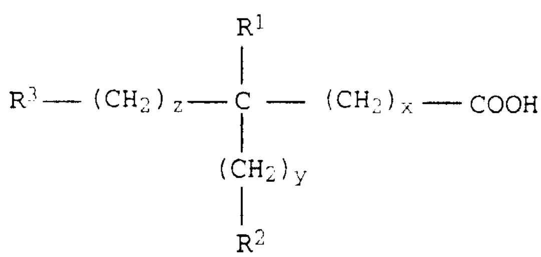
(I)

worin die Indices und die Variablen die in Anspruch 1 angegebene Bedeutung haben, und/oder mindestens eines Anhydrids mindestens einer dieser Carbonsäuren I.

**3.** Elektrisch halbleitendes Gemisch auf der Basis von Ethylenhomopolymerisaten und/oder -copolymerisaten, enthaltend jeweils bezogen auf das Gemisch, 10 bis 50 Gew.-% eines elektrisch leitfähigen Pigments und 0,01 bis 5 Gew.-% mindestens einer $C_2$- bis $C_8$-Carbonsäure der allgemeinen Formel I,

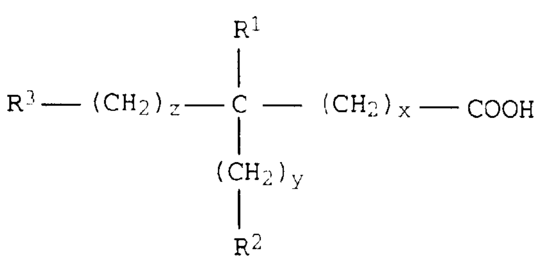
(I)

worin die Indices und die Variablen die in Anspruch 1 angegebene Bedeutung haben, und/oder mindestens eines Anhydrids mindestens einer dieser Carbonsäuren I.

4. Das Gemisch nach Anspruch 2 oder 3, dadurch gekennzeichnet, daß man als Carbonsäure I Essigsäure, Propionsäure, Buttersäure, Isobuttersäure, Valeriansäure, Isovaleriansäure, Pivalinsäure, Malonsäure, Bernsteinsäure, Glutarsäure, Adipinsäure, Pimelinsäure, Korksäure, Äpfelsäure, Weinsäure, Traubensäure, Tartronsäure, Mesoxalsäure und Zitronensäure und als Anhydrid I ein Anhydrid einer dieser Carbonsäuren I und/oder ein gemischtes Anhydrid mindestens zweier dieser Carbonsäuren I verwendet.

5. Das Gemisch nach Anspruch 4, dadurch gekennzeichnet, daß man Zitronensäure und/oder deren Anhydrid verwendet.

6. Elektrisches Mittel- und Hochspannungskabel, enthaltend mindestens eine elektrisch halbleitende Schicht zur Begrenzung des elektromagnetischen Feldes und mindestens eine elektrisch isolierende Schicht, dadurch gekennzeichnet, daß die elektrisch halbleitende Schicht oder mindestens eine der elektrisch halbleitenden Schichten aus einem Gemisch gemäß einem der Ansprüche 3 bis 5 besteht.

7. Elektrisches Mittel- und Hochspannungskabel, enthaltend mindestens eine elektrisch halbleitende Schicht zur Begrenzung des elektromagnetischen Feldes und mindestens eine elektrisch isolierende Schicht, dadurch gekennzeichnet, daß die elektrisch isolierende Schicht oder mindestens eine der elektrisch isolierenden Schichten aus einem Gemisch gemäß einem der Ansprüche 2, 4 oder 5 besteht.

8. Das elektrische Mittel- und Hochspannungskabel nach Anspruch 6, dadurch gekennzeichnet, daß die elektrisch isolierende Schicht oder mindestens eine der elektrisch isolierenden Schichten aus einem Gemisch gemäß einem der Ansprüche 2, 4 oder 5 besteht.

**Claims**

1. Use of a $C_2$-$C_8$-carboxylic acid of the formula I

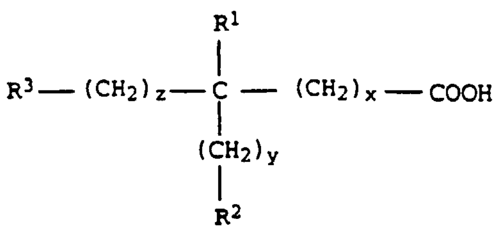

(I)

where $R^1$, $R^2$ and $R^3$ independently of one another are each hydrogen, hydroxyl, carboxyl or $C_1$-$C_6$-alkyl and x, y and z independently of one another are each 0 or an integer of from 1 to 6, and/or of an anhydride of one or more of these carboxylic acids I, as an inhibitor of the formation or of the growth of water trees in ethylene homopolymers and/or copolymers under the influence of strong electric fields.

2. An electrically insulating mixture based on ethylene homopolymers and/or copolymers, containing from 0.01 to 5% by weight, based on the mixture, of one or more $C_2$-$C_8$-carboxylic acids of the formula I

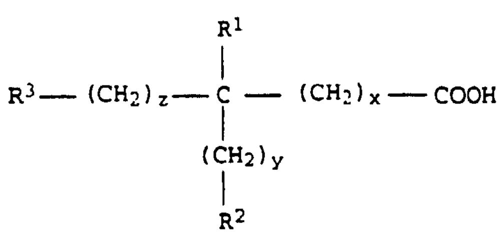

(I)

where the indices and the variables have the meanings stated in claim 1, and/or of one or more anhydrides of one

or more of these carboxylic acids I.

**3.** An electrically semiconductive mixture based on ethylene homopolymers and/or copolymers, containing, based in each case on the mixture, from 10 to 50% by weight of an electrically conductive pigment and from 0.01 to 5% by weight of one or more $C_2$-$C_8$-carboxylic acids of the formula I

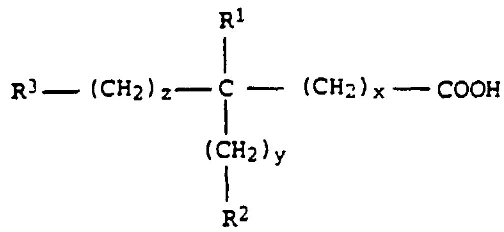

(I)

where the indices and variables have the meanings stated in claim 1, and/or of one or more anhydrides of one or more of these carboxylic acids I.

**4.** A mixture as claimed in claim 2 or 3, wherein the carboxylic acid I used is acetic acid, propionic acid, butyric acid, isobutyric acid, valeric acid, isovaleric acid, pivalic acid, malonic acid, succinic acid, glutaric acid, adipic acid, pimelic acid, suberic acid, malic acid, tartaric acid, racemic tartaric acid, tartronic acid, mesoxalic acid or citric acid and the anhydride I used is an anhydride of one of these carboxylic acids I and/or a mixed anhydride of two or more of these carboxylic acids I.

**5.** A mixture as claimed in claim 4, wherein citric acid and/or its anhydride are used.

**6.** An electrical medium or high voltage cable containing one or more electrically semiconductive layers for limiting the electromagnetic field and one or more electrically insulating layers, wherein the electrically semiconductive layer or one or more of the electrically semiconductive layers consists or consist of a mixture as claimed in claim 3 or 4 or 5.

**7.** An electrical medium or high voltage cable containing one or more electrically semiconductive layers for limiting the electromagnetic field and one or more electrically insulating layers, wherein the electrically insulating layer or one or more of the electrically insulating layers consists or consist of a mixture as claimed in claim 2, 4 or 5.

**8.** An electrical medium or high voltage cable as claimed in claim 6, wherein the electrically insulating layer or one or more of the electrically insulating layers consists or consist of a mixture as claimed in claim 2, 4 or 5.

**Revendications**

**1.** Utilisation d'acides carboxyliques en C2-C8 répondant à la formule générale I

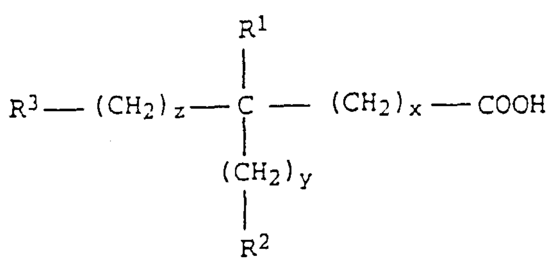

(I)

dans laquelle les indices et les symboles ont les significations suivantes :

$R^1$, $R^2$ et $R^3$ représentent chacun, indépendamment les uns des autres, un atome d'hydrogène ou un groupe hydroxy, carboxy ou alkyle en C1- C4,

x, y et z sont, indépendamment les uns des autres, 0 ou des nombres entiers allant de 1 à 6 ;

et/ou des anhydrides d'au moins un de ces acides carboxyliques I en tant qu'inhibiteurs de la formation ou de la croissance des arborescences (water trees) dans des homopolymères et/ou copolymères de l'éthylène sous l'action de champs électriques intenses.

**2.** Mélange isolant de l'électricité, à base d'homopolymères et/ou de copolymères de l'éthylène, contenant, sur son poids, de 0,01 à 5 % d'au moins un acide carboxylique en C2-C8 de formule générale I

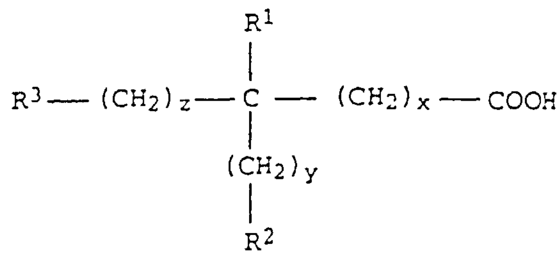

(I)

dans laquelle les indices et les symboles ont les significations indiquées dans la revendication 1, et/ou d'au moins un anhydride d'au moins un de ces acides carboxyliques I.

**3.** Mélange semi-conducteur de l'électricité à base d'homopolymères et/ou de copolymères de l'éthylène, contenant, sur son poids, de 10 à 50 % en poids d'un pigment conducteur de l'électricité et de 0,01 à 5 % en poids d'au moins un acide carboxylique en C2-C8 répondant à la formule générale I

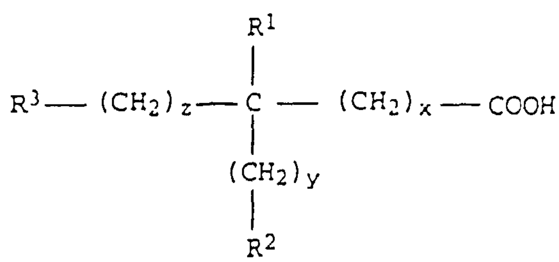

(I)

dans laquelle les indices et les symboles ont les significations indiquées dans la revendication 1, et/ou d'au moins un anhydride d'au moins un de ces acides carboxyliques I.

**4.** Mélange selon la revendication 2 ou 3, caractérisé par le fait que l'acide carboxylique I est l'acide acétique, l'acide propionique, l'acide butyrique, l'acide isobutyrique, l'acide valérique, l'acide isovalérique, l'acide pivalique, l'acide malonique, l'acide succinique, l'acide glutarique, l'acide adipique, l'acide pimélique, l'acide subérique, l'acide malique, l'acide tartrique, racémique ou droit, l'acide tartronique, l'acide mésoxalique ou l'acide citrique et l'anhydride I est un anhydride de l'un de ces acides carboxyliques I et/ou un anhydride mixte d'au moins deux de ces acides carboxyliques I.

**5.** Mélange selon la revendication 4, caractérisé par le fait que l'acide utilisé est l'acide citrique et/ou son anhydride.

**6.** Câble électrique moyenne et haute tension contenant au moins une couche semi-conductrice de l'électricité pour la limitation du champ électro-magnétique et au moins une couche isolante de l'électricité, caractérisé par le fait que la couche semi-conductrice de l'électricité ou au moins une des couches semi-conductrices de l'électricité consiste en un mélange selon une des revendications 3 à 5.

**7.** Câble électrique moyenne et haute tension, contenant au moins une couche semi-conductrice de l'électricité pour la limitation du champ électro-magnétique et au moins une couche isolante de l'électricité, caractérisé par le fait

que la couche isolante de l'électricité ou au moins une des couches isolantes de l'électricité consiste en un mélange selon une des revendications 2, 4 ou 5.

**8.** Câble électrique moyenne et haute tension selon la revendication 6, caractérisé par le fait que la couche isolante de l'électricité ou au moins une des couches isolantes de l'électricité consiste en un mélange selon une des revendications 2, 4 ou 5.